Europäisches Patentamt

(19) European Patent Office

Office européen des brevets

(11) Numéro de publication : **0 104 963**
**B1**

(12) **FASCICULE DE BREVET EUROPÉEN**

(45) Date de publication du fascicule du brevet :
11.02.87

(21) Numéro de dépôt : 83401631.3

(22) Date de dépôt : 09.08.83

(51) Int. Cl.⁴ : **H 04 N   7/13**

(54) **Procédé de compression de débit de données successivement transmises entre un émetteur et un récepteur de télévision, et système mettant en oeuvre le procédé.**

(30) Priorité : 20.08.82 FR 8214434

(43) Date de publication de la demande :
04.04.84 Bulletin 84/14

(45) Mention de la délivrance du brevet :
11.02.87 Bulletin 87/07

(84) Etats contractants désignés :
DE GB

(56) Documents cités :
EP-A- 0 012 632
DE-A- 2 341 930
DE-A- 2 402 981
US-A- 3 761 613
US-A- 4 144 543
RUNDFUNKTECHNISCHE MITTEILUNGEN, vol. 20, no. 6, 1976, Hambourg (DE), J. HEITMANN: "Ein systemkompatibles digitales Farbfernsehsignal", pages 236-241

(73) Titulaire : **THOMSON-CSF**
**173, Boulevard Haussmann**
**F-75379 Paris Cedex 08 (FR)**

(72) Inventeur : **Catros, Jean-Yves**
**THOMPSON-CSF SCPI 173, boulevard Haussmann**
**75379 Paris Cedex 08 (FR)**

(74) Mandataire : **Lincot, Georges et al**
**THOMSON-CSF SCPI 19, avenue de Messine**
**F-75008 Paris (FR)**

**0 104 963**

## Description

L'invention concerne un procédé et un système de compression de débit de données transmises entre un émetteur et un récepteur de télévision.

En télévision numérique, les signaux de luminance et de différence de couleurs sont numérisés à huit éléments binaires par point, avec une structure et une fréquence d'échantillonnage qui dépendent du problème traité. Ces informations sont généralement transmises en temps réel et leur débit brut est très élevé, supérieur à 140 mégabits/seconde, en principe, ce qui impose de réduire leur débit pour pouvoir emprunter les supports de transmission existants.

On connaît différents procédés et dispositifs de réduction de débit, parmi ceux-ci, les procédés de codage par modulation d'impulsions codées différentielles des signaux de télévision sont particulièrement intéressants par leur simplicité de réalisation, et ceci d'autant plus que les données transmises sont constituées par des mots de code binaire de longueur fixe, car les problèmes de gestion des mémoires tampon nécessaires à l'adaptation du débit variable de l'émetteur au débit fixe du canal reliant l'émetteur au récepteur sont éliminés, et de plus, l'emploi d'un codage intra-image permet d'éviter l'emploi systématique de mémoires d'image. Les procédés de codage différentiel connus consistent à coder la différence entre la valeur d'un échantillon du signal et une estimation, ou prédiction, calculée à partir des valeurs des échantillons précédents déjà codés, cette différence étant quantifiée par un quantificateur à n niveaux de quantification. A chaque niveau i est associé un code $C_i$ qui est transmis sur la ligne ou le canal de transmission. Le code reçu est transformé en sa valeur réelle qui est ensuite additionnée à une valeur de prédiction calculée par le récepteur pour reconstituer le signal. Une boucle de contre-réaction permet de réaliser au niveau de l'émetteur une prédiction identique à celle qui est élaborée au récepteur.

Des exemples de réalisation de dispositifs de codage-décodage différentiel de données numériques sont décrits dans le brevet français n° 2.515.450.

Un problème se pose cependant lorsque l'on cherche à appliquer les méthodes de codage-décodage différentiel à la transmission des images de télévision, notamment, lorsque l'on veut obtenir une compression de débit des données transmises importante, car les procédés de codage différentiel ne permettent pas de descendre en dessous de quatre éléments binaires ou bits par point d'image transmis, avec un codage intra-image et un code à longueur fixe pour la composante de luminance. En dessous de cette valeur la qualité de l'image reconstituée n'est plus acceptable.

Une compression de débit importante entraîne en effet, des niveaux de quantification espacés, ce qui pose des problèmes de restitution de l'image, à la fois pour les zones d'image uniformes, et pour les contours de l'image. On constate que dans les zones uniformes de l'image, de faibles variations de luminance sont directement perçues par l'œil et que par conséquent, il serait préférable de quantifier le signal de luminance des zones uniformes à l'aide de quantificateurs ayant des niveaux resserrés, pour ne pas amplifier exagérément les faibles variations de luminance qui pourraient laisser apparaître de faux contours au voisinage de l'erreur de prédiction nulle, et que par contre sur les contours de l'image qui marquent la transition entre deux zones uniformes, une quantification à l'aide de niveaux de reconstruction espacés serait préférable pour mieux restituer les contours. Toutefois, dans ce deuxième cas, l'espacement entre deux niveaux ne peut dépasser une certaine limite au-delà de laquelle, les contours apparaissent restitués sous forme de paliers ou de marches d'escalier.

Pour résoudre ce problème, une solution consiste à commuter les quantificateurs sur deux caractéristiques de quantification différentes en fonction de l'aspect local du point de l'image à transmettre. Par exemple, pour des points situés dans des zones uniformes de l'image, le codage sera effectué à l'aide d'un quantificateur à niveaux de reconstruction resserrés au voisinage de l'erreur de prédiction nulle, et pour des points situés dans les zones de contours ou texture de l'image, un quantificateur à niveaux de reconstruction élevés sera utilisé.

Les méthodes de commutation connues, sur des caractéristiques de quantification différentes, peuvent se classer en deux groupes suivant que l'instant de commutation est ou n'est pas transmis.

Si l'indication de changement de caractéristiques de quantification n'est pas transmise, la caractéristique est obtenue de façon identique à l'émetteur et au récepteur à partir de tests qui sont effectués sur des points de l'image déjà connus du récepteur qui constituent le voisinage causal du point à coder. Dans ces conditions si un code à longueur fixe est utilisé, le débit de chaque ligne d'image est constant puisque la seule information à transmettre est la valeur de l'erreur de prédiction quantifiée. Un problème se pose cependant, lorsque dans certains cas, un voisinage causal ne permet pas à lui seul de trouver la meilleure caractéristique du quantificateur à utiliser. Ce problème se pose tout particulièrement lorsque les points de l'image à quantifier se trouvent dans une zone de transition séparant une zone uniforme d'une zone contours de l'image.

Par contre, si la commutation de caractéristique de quantification s'effectue sur des points non connus du récepteur constituant un voisinage non causal pour le récepteur, il est nécessaire que l'émetteur indique les indications de changement de caractéristique au récepteur. Dans ce cas, même si un code à longueur fixe est utilisé pour coder les erreurs de prédiction quantifiées, le débit de chaque ligne d'image est variable, et alors se posent des problèmes de gestion des mémoires tampon nécessaires pour adapter le débit variable de l'émetteur au débit fixe du canal de transmission.

2

Le but de l'invention est de pallier les inconvénients précités.

A cet effet, l'invention a pour objet un procédé de compression de débit de données successivement transmises entre un émetteur et un récepteur de télévision, les données tant représentatives des valeurs de luminance ou de chrominance de chaque point d'une image de télévision et étant codées à l'émetteur par un dispositif de codage différentiel du type comprenant au moins un prédicteur, un quantificateur, un dispositif de reconstruction de la donnée transmise et un allocateur de code et décodées au récepteur par un décodeur différentiel comprenant au moins un transformateur de codes, un prédicteur et un dispositif de reconstruction de la donnée transmise, le procédé consistant à déterminer avant l'émission les codes à transmettre en fonction d'au moins deux caractéristiques différentes $Q_1$ et $Q_2$ de quantification et/ou de prédiction $P_1$ et $P_2$ les unes à niveaux de quantification et/ou prédiction très resserrés dans les zones uniformes de l'image et à transmettre l'indication de changement de caractéristique au récepteur lorsque le codage de la donnée est obtenu en utilisant une caractéristique différente de celle qui a été utilisée pour la donnée précédemment transmise, caractérisé en ce qu'il consiste à transmettre l'indication de changement de caractéristique de quantification et/ou de prédiction à la place de la donnée relative au point pour lequel intervient ce changement et à reconstruire dans le récepteur la donnée non transmise en fonction des données correspondantes des points précédents, déjà reçues par le récepteur.

Selon une autre caractéristique le procédé selon l'invention consiste, pour déterminer le code des données à transmettre, à établir les coûts de codage et les codes correspondant des données de chaque point à transmettre pour chacune des caractéristiques de quantification et/ou de prédiction utilisée, chaque coût étant obtenu par une mesure du dépassement de l'erreur de codage de chaque point au-dessus d'un seuil de visibilité pour lequel l'erreur devient apparente sur l'image reçue, à définir une première suite de coûts pour coder les données de chaque point en utilisant une première caractéristique et une deuxième suite de coûts pour coder les données de chaque point en utilisant une deuxième caractéristique, chaque coût d'une suite étant obtenu à partir des coûts obtenus correspondants au codage du point précédent en déterminant le minimum des coûts calculés en fonction, soit du coût précédent de la même suite ou du coût précédent de l'autre suite, à repérer dans chaque suite, à l'aide d'un code de changement, chaque coût minimum qui est obtenu à partir du coût de codage du point précédent de l'autre suite et à ranger les codes à transmettre correspondant aux coûts calculés de l'une ou l'autre suite en déterminant un chemin de codage alternant sur l'une ou l'autre suite en commençant par les codes de la suite dont le dernier coût calculé est inférieur au coût correspondant de l'autre suite et en continuant successivement par les codes de l'autre suite dès qu'un code de changement dans une suite est rencontré.

L'invention a également pour objet un système de compression de débit de données transmises entre un émetteur et un récepteur faisant application du procédé précité.

D'autres caractéristiques et avantages de l'invention apparaîtront également à l'aide de la description faite au regard des dessins annexés donnés uniquement à titre d'exemple et dans lesquels :

La figure 1  représente un système de compression de débit de données transmises entre un émetteur et un récepteur mettant en œuvre un dispositif connu de codage-décodage différentiel.

La figure 2  est une représentation du graphe d'une fonction de visibilité et illustre la méthode de détermination du coût de codage.

Les figures 3 et 4  illustrent le procédé de détermination du chemin de codage minimum pour coder chaque point de l'image.

La figure 5  est une représentation d'une caractéristique de quantification utilisée pour coder les points à transmettre dans des zones de contours de l'image.

La figure 6  est une représentation d'une caractéristique de quantification utilisée pour coder les points situés dans des zones uniformes de l'image.

La figure 7  est une représentation du dispositif d'émission des codes selon l'invention.

Les figures 8 et 9  représentent des modes de réalisation des dispositifs de propagation des erreurs de codage du dispositif de la figure 7.

Les figures 10, 11, 12 et 13  sont des représentations des dispositifs de codage des figures 8 et 9.

La figure 14  représente un mode de réalisation du dispositif de réception.

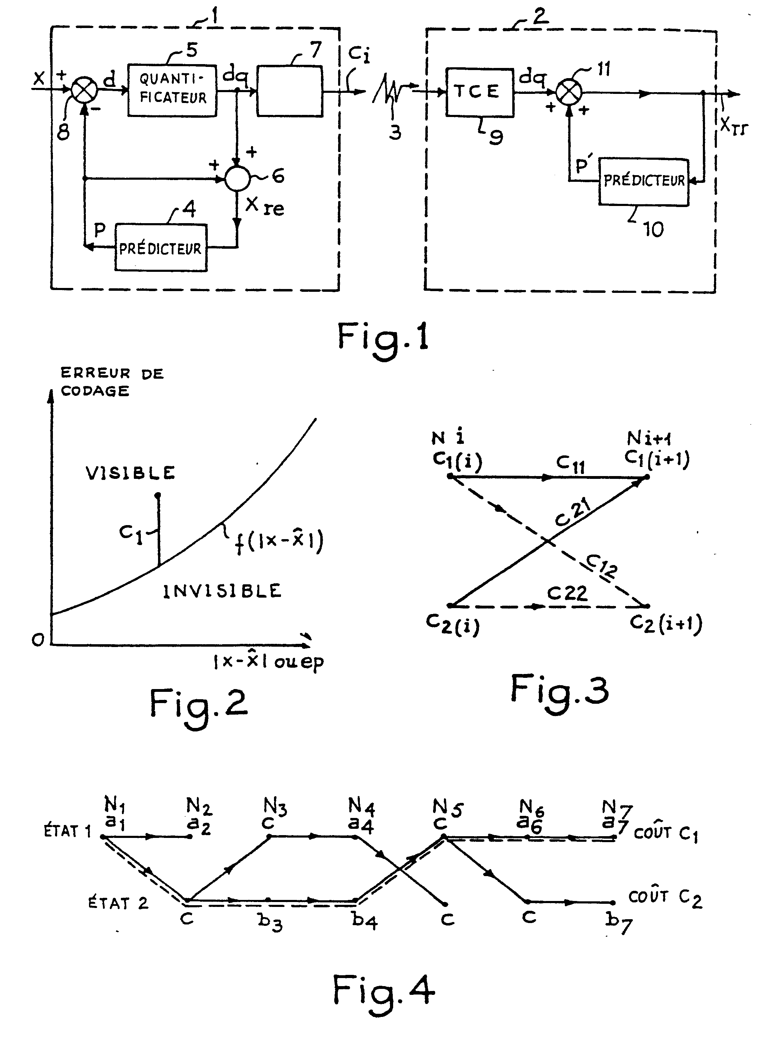

Le système connu de codage-décodage différentiel représenté à la figure 1 est constitué, du côté émetteur, par un dispositif de codage différentiel 1, représenté à l'intérieur d'un rectangle en pointillé, et du côté récepteur, par un dispositif de décodage différentiel 2, représenté également à l'intérieur d'un rectangle en pointillé. La sortie du dispositif de codage 1 est reliée à l'entrée du dispositif de décodage 2 par l'intermédiaire d'un canal de transmission 3. Le dispositif de codage différentiel 1 comprend : un prédicteur 4, un quantificateur 5, un dispositif de reconstruction de la donnée transmise 6, ainsi qu'un allocateur de code 7. La donnée X à transmettre est appliquée à l'entrée d'un soustracteur 8 dont l'autre entrée est reliée à la sortie du prédicteur 4. Le prédicteur 4 délivre une valeur de prédiction P. La donnée à coder X diminuée de la valeur de la prédiction P est appliquée à l'entrée du quantificateur 5, par la sortie du soustracteur 8, pour être quantifiée selon n niveaux. A chaque niveau i de quantification, un allocateur de code 7 associe un code $C_i$ qui est transmis sur la ligne ou la canal 3. Le niveau dq de quantification délivré par le quantificateur 5 et qui correspond à la différence ou erreur de prédiction X — P, est appliqué à l'entrée du dispositif de reconstruction de la donnée transmise 6, généralement constitué par un additionneur, dont l'autre entrée est reliée à la sortie du prédicteur 4. La donnée reconstruite $X_{re}$

transmise à la sortie du dispositif de reconstruction de la donnée transmise 6, est appliquée à l'entrée du prédicteur 4. Le code $C_i$ est reçu par le dispositif de décodage 2 qui est constitué par un transformateur de code 9, un prédicteur 10 et un dispositif de reconstruction de la donnée reçue 11. Le transformateur de code 9 reconstitue les niveaux de quantification dq pour les appliquer à une première entrée du dispositif de reconstruction de la donnée reçue 11. Le dispositif de reconstruction de la donnée reçue 11, généralement constitué par un additionneur, reçoit sur une autre entrée la valeur de la prédiction P' calculée par le prédicteur 10 et délivre sur sa sortie la valeur $X_{rr}$ de la donnée reconstruite reçue.

L'opération de quantification effectuée par le quantificateur 5 permet d'associer à toutes les valeurs de différence X — P comprises entre deux seuils $S_i$ et $S_{i+1}$ une valeur unique de code $C_i$. Cette opération, effectuée avec le concours de l'allocateur de code 7, permet en codage différentiel de réaliser la réduction de débit. Dans le cas où il n'y a pas d'erreurs de transmission, et comme l'on s'arrange aussi bien dans le dispositif d'émission que dans le dispositif de réception, pour avoir les mêmes fonctions de prédiction pour les prédicteurs 4 et 10, les valeurs reconstruites respectivement $X_{re}$ et $X_{rr}$ à l'émetteur et au récepteur sont identiques. Dans le cas contraire, ces valeurs sont différentes et comme la valeur de prédiction calculée dépend de la valeur reconstruite à l'entrée du prédicteur, on constate qu'en cas d'erreur, les prédictions à l'émetteur et au récepteur divergent. Par conséquent, si aucune précaution n'est prise pour minimiser les erreurs de transmission aux instants de transmission suivants, les données reçues suivantes sont entachées d'erreurs. Des dispositifs évitant la propagation d'erreurs comme ceux décrits dans le brevet français 2.515.450 peuvent naturellement être utilisés pour résoudre ce problème.

Le procédé et le système selon l'invention mettent en œuvre un système de codage différentiel conforme à celui qui est décrit à la figure 1 à la différence toutefois que deux caractéristiques de quantification et/ou de prédiction, au lieu d'une, sont utilisées à l'émetteur comme au récepteur et qu'il comprend de plus, un dispositif pour transmettre une indication de changement de caractéristique à la place du point correspondant qui doit être transmis lorsque le point se trouve dans une zone d'image nécessitant ce changement et un dispositif, au niveau du récepteur, pour reconstruire le point non transmis en fonction des échantillons déjà connus du récepteur. Pour parvenir à ce résultat, le procédé selon l'invention consiste à rendre minimum une fonction prenant en compte les erreurs de codage, d'un nombre déterminé de points, au-dessus d'un seuil défini par une fonction de visibilité de ces erreurs. La fonction de prise en compte choisie pourra être suivant les applications, soit la simple somme des visibilités des erreurs de codage ou encore la somme des carrés ou des cubes ou des puissances $n^{\text{ème}}$ des visibilités des erreurs de codage. L'erreur de codage correspond, soit à l'erreur de prédiction X — P diminuée de sa valeur quantifiée Q(X — P), Q représentant la caractéristique de quantification utilisée, soit à la différence entre la donnée X et la valeur reconstruite de la donnée précédente. La fonction de visibilité détermine le seuil au-dessus duquel l'erreur de codage devient apparente dans l'image reçue, et les points considérés dans ce mode de calcul sont, pour des simplifications de réalisation, ceux constituant une ligne d'image de télévision. Un graphe d'une fonction de visibilité est représenté à la figure 2. En abscisse est reportée la différence $(X — \hat{X})$ représentant l'écart entre la valeur X de la donnée du point à coder et une valeur $\hat{X}$ reconstruite du point obtenue à partir des points voisins du point à coder. Ce mode de réalisation n'est pas unique, d'autres fonctions de visibilité pourront naturellement être choisies, en fonction des applications, avec d'autres grandeurs pour graduer l'axe des abscisses, par exemple l'axe des abscisses pourra être gradué suivant les valeurs d'une fonction $g(X_i)$ où $X_i$ pourra représenter indifféremment soit des points d'image à coder (image source) ou des points déjà codés représentés par des erreurs de prédiction $ep = X — P$ ou de écarts $X — \hat{X}$ entre le point et sa valeur reconstruite.

A chaque erreur de codage est associée un coût $C_1$ qui est nul pour toute erreur en dessous du seuil défini par la fonction de visibilité et qui est, par exemple, proportionnel à la valeur de l'erreur dépassant le seuil. Pour rendre par exemple minimum la somme des erreurs de codage situées au-dessus du seuil de visibilité pour l'ensemble des points d'une ligne d'image, on utilisera une méthode de programmation dynamique qui, à chaque point d'image, propagera deux chemins affectés chacun d'un coût défini à partir d'une fonction de visibilité. L'illustration de cette méthode est représentée aux figures 3 et 4. Puisque deux caractéristiques de quantification $Q_1$ et $Q_2$ peuvent être utilisées pour coder chaque point d'image, chaque point d'image peut être représenté par deux états caractéristiques de codage différents résultant de l'utilisation de l'une ou de l'autre des deux caractéristiques de quantification. Dans la suite de la description, on désignera par état 1, l'état qui résulte du codage d'un point avec la première caractéristique de quantification $Q_1$ et par état 2, l'état qui résulte du codage d'un point avec la deuxième caractéristique de quantification $Q_2$. Naturellement en fonction de ce qui précède, chaque état sera caractérisé par un coût de codage $C_1$ ou $C_2$. Ainsi sur la figure 3 les états des points Ni et Ni + 1 sont représentés affectés des coûts $C_{1(i)}$ et $C_{1(i+1)}$ pour l'état 1, et $C_{2(i)}$ et $C_{2(i+1)}$ pour l'état 2. En venant du point Ni, deux chemins sont possibles pour placer le point suivant Ni + 1 dans l'état 1, un premier chemin consiste à venir directement de l'état 1 du point précédent en ajoutant un coût $C_{11}$, et un deuxième chemin consiste à venir de l'état 2 du point précédent en ajoutant un coût $C_{21}$. De même, pour placer le point Ni + i dans l'état 2 deux chemins sont possibles en venant, soit directement de l'état 2 du point Ni précédent et en ajoutant un coût $C_{22}$, soit en venant de l'état 1 du point Ni précédent et en ajoutant un coût $C_{12}$. Pour calculer le coût $C_{1(i+1)}$ du point Ni + 1 on calcule le minimum des coûts nécessaires pour arriver au point Ni + 1 selon l'un ou l'autre des deux chemins. Ce qui correspond à la formule suivante,

$$C_{1(i+1)} = MIN \ (C_{1(i)} + C_{11} \ ; \ C_{2(i)} + C_{21}).$$

De même pour définir le coût $C_{2(i+1)}$ du point $Ni + 1$ on calcule le minimum des coûts permettant de parvenir au point $Ni + 1$ dans l'état 2 par l'un ou l'autre des deux chemins selon la formule suivante

$$C_{2(i+1)} = MIN \ (C_{2(i)} + C_{22}, \ C_{1(i)} + C_{12}).$$

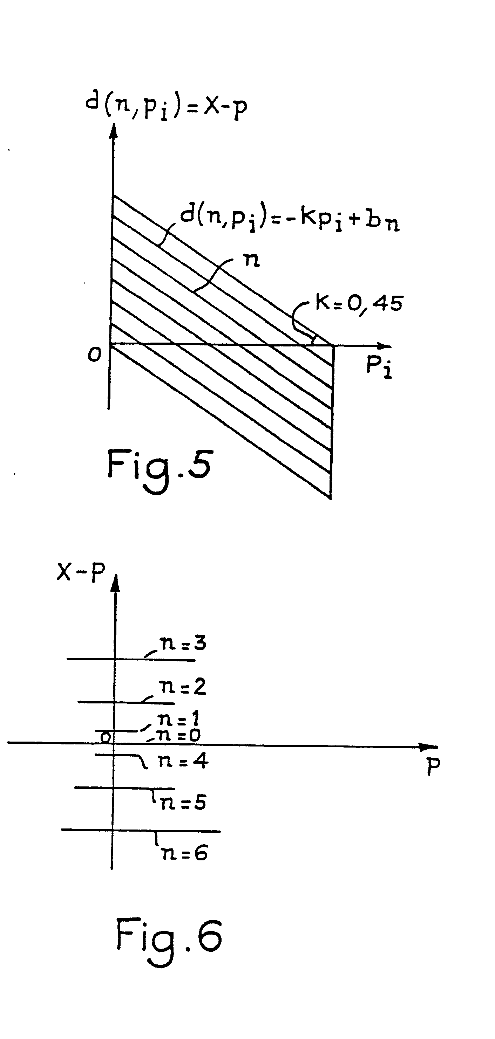

Dans ces formules, $C_{11}$ représente le coût pour passer du point $Ni$ au point $Ni + 1$ en faisant usage de la caractéristique de quantification $Q_1$, $C_{22}$ représente le coût pour passer du point $Ni$ au point $Ni + i$ en utilisant la caractéristique de quantification $Q_2$, $C_{21}$ représente le coût pour passer de la caractéristique de quantification $Q_2$ utilisée pour le calcul au point $Ni$, à la caractéristique de quantification $Q_1$ utilisée pour le calcul au point $Ni + 1$, et $C_{12}$ représente le coût pour passer de l'utilisation de la caractéristique de quantification au point $Ni$, à l'utilisation de la caractéristique de quantification $Q_2$ au point $Ni + 1$. En fonction des coûts obtenus par le parcours de l'un ou de l'autre chemin pour parvenir dans l'état 1 ou dans l'état 2 au point $Ni + 1$, le codage du point $Ni + 1$ se détermine suivant le chemin qui présente le coût le plus faible. Ce codage pourra s'effectuer par utilisation des deux caractéristiques de quantification représentés aux figures 5 et 6. La figure 5 représente une caractéristique de quantification spécialement utilisée pour coder les points situés dans des zones de contours ou fortement texturées de l'image.

Cette caractéristique est linéaire et est définie par un réseau de droites parallèles, dans un système de coordonnées rectangulaires portant sur l'axe des abscisses les valeurs de prédiction $P_i$ et sur l'axe des ordonnées les erreurs de prédiction des $d(npi) = X — P$ telles que

$$D(n,pi) = — kP_i + b_n,$$

k étant inférieur ou égal à 1, n représentant le code alloué en fonction du niveau de prédiction $P_i$ et de l'erreur de prédiction $X — P$, $b_n$ représentant l'erreur de prédiction pour le niveau de prédiction nulle. Dans l'exemple de réalisation de l'invention pour coder une erreur de prédiction avec trois bits, sept niveaux de quantification peuvent être utilisés. Une valeur de K voisine de 0,45 pourra être choisie.

La figure 6 représente la caractéristique de quantification utilisée pour coder des points de l'image situés dans des zones uniformes de l'image, il s'agit d'une caractéristique linéaire à 7 niveaux ayant des niveaux resserrés au voisinage de l'erreur de prédiction nulle.

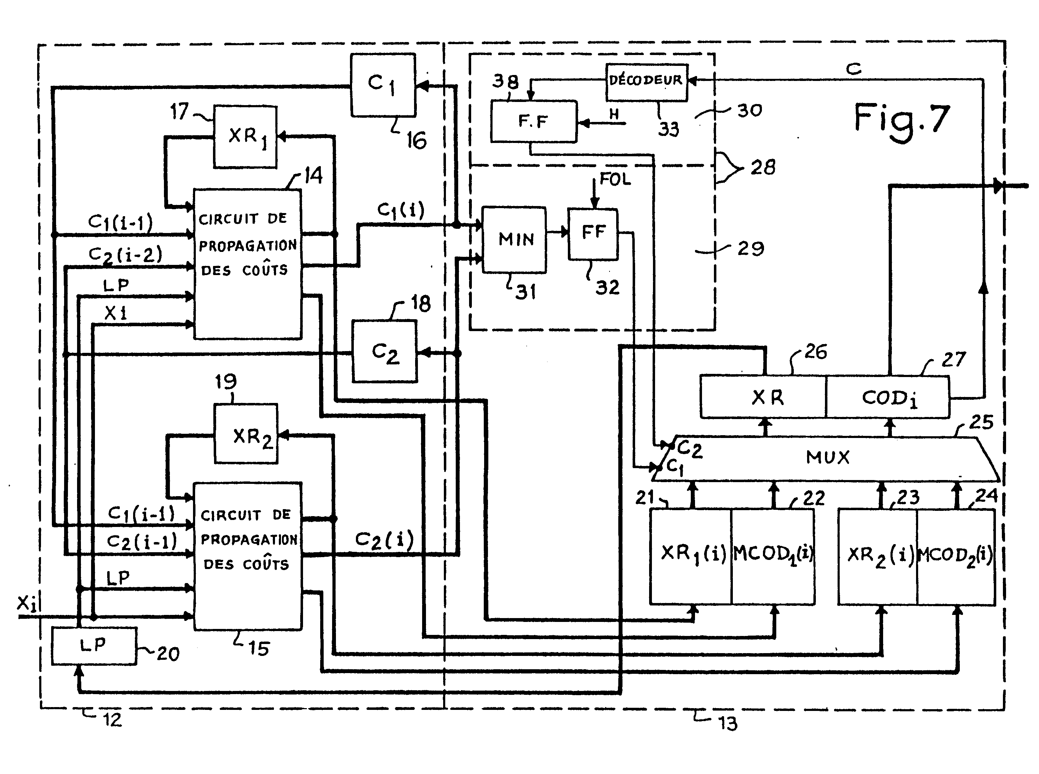

Le procédé de calcul des codes à émettre et des valeurs reconstruites est maintenant décrit à l'aide du schéma représenté à la figure 4. A partir des coûts $C_{1(i—1)}$ et $C_{2(i—1)}$ connus pour le point $Ni — 1$ le procédé calcule les coûts $C_{1(i)}$ et $C_{2(i)}$ pour le point $Ni$ à l'aide du procédé de minimisation d'une fonction de prise en compte des erreurs de codage précédemment décrite. Pour cela, il dispose de la donnée $X_i$ du point courant du signal de télévision, de la valeur de la donnée du point précédent reconstruite $XR_{i—1}$ et des données reconstruites de certains points de la ligne précédente. Les points précis à utiliser dépendent des fonctions de prédiction et de reconstruction choisis. Comme il est fait usage de caractéristiques de quantification différentes, un point $Ni$ à coder nécessite un calcul de deux valeurs reconstruites et de deux codes, une première valeur reconstruite $XR_{1(i)}$ et un premier code $COD_{1(i)}$ pour placer le point $Ni$ dans l'état 1, une deuxième valeur reconstruite $XR_{2(i)}$ et un deuxième code $COD_{2(i)}$ pour placer le point $Ni$ dans l'état 2. Ces valeurs sont stockées en mémoire dans l'ordre de traitement des points sur chaque ligne d'image et la propagation des coûts, de la manière montrée à la figure 3, se poursuit jusqu'à la fin de chaque ligne. En fin de ligne, la valeur minimale des coûts $C_1$ ou $C_2$, obtenues pour le dernier point de la ligne, initialise la recherche d'un chemin de codage pour lequel le coût de l'erreur de codage est minimale. En chaque point $Ni$ de la ligne, le procédé consiste à choisir une parmi les deux possibilités de codes et de valeurs reconstruites suivantes ($XR1_{(i)}$, $COD_{1(i)}$) ou ($XR_{2(i)}$, $COD_{2(i)}$) pour donner la valeur $COD_i$ du code à transmettre et la valeur reconstruite $XR_{(i)}$. Le choix entre ces valeurs est commandé par les valeurs de code lues de la façon représentée à la figure 4. Pour simplifier, l'exemple montré à la figure 4 est constitué par une ligne comportant sept points numérotés de $N_1$ à $N_7$, les valeurs $a_i$ et $b_i$ représentent les codes stockés dans deux mémoires de code, $MCOD_1$ 22 et $MCOD_2$ 24 ci-après représentées à la figure 7. La lettre C désigne le code de changement qui est mémorisé dans l'une des deux mémoires $MCOD_1$ ou $MCOD_2$ lorsqu'au point $Ni$ considéré, le procédé de minimisation des erreurs et de calcul de coût minimum pour ce point a montré la nécessité de changer de caractéristique de quantification. Ainsi sur la figure 4 le procédé de propagation des coûts fait passer du point $N_1$ dans l'état 1 au point $N_2$ dans l'état 2. Pour noter ce changement, un code noté C est mémorisé dans la mémoire $MCOD_2$ à la place du code correspondant du point $N_2$. De même pour arriver au point $N_3$ à partir du point $N_2$, deux chemins sont possibles, en venant soit de l'état 2 du point $N_2$, à l'état 1 du point $N_3$, soit en venant de l'état 2 du point $N_2$ et en restant à l'état 2 au point $N_3$. On note que dans ces conditions l'état 2 du point $N_3$ n'a pas changé et que dans ce cas le code correspondant $b_3$ est mémorisé dans la mémoire $MCOD_2$ et que par contre le changement de caractéristique effectué pour passer de l'état 2 du point $N_2$ à l'état 1 du point $N_3$ est noté pour le point $N_3$ par le code C mémorisé dans la mémoire $MCOD_1$. On note également que pour le point $N_4$ aucun changement n'intervient dans la propagation des coûts en venant du point $N_3$ et que par conséquent un code $a_4$ est mémorisé dans la mémoire $MCOD_1$

correspondant à l'état 1 du point $N_4$ et qu'un code $b_4$ est mémorisé dans la mémoire $MCOD_2$ correspondant à l'état 1 l'état 2 du point $N_4$. Au point $N_5$ la propagation des coûts provenant du point $N_4$ impose simultanément un changement de caractéristiques lorsque l'on vient de l'état 1 du point $N_4$ ou de l'état 2 du point $N_4$, ce changement est comme précédemment noté par la lettre C et un code de changement est mémorisé pour le point $N_5$ dans l'une et l'autre des mémoires de code $MCOD_1$ et $MCOD_2$. On note également que pour les points $N_6$ et $N_7$ la propagation des coûts ne nécessite pas d'opération de changement de caractéristique lorsque l'on vient du point $N_5$ en restant dans l'état 1 et que par contre un changement de caractéristique s'impose pour arriver dans l'état 2 du point $N_6$ car la propagation du coût fait changer de caractéristique. Un code de changement C est donc mémorisé dans la mémoire $MCOD_2$ pour le point $N_6$ pour noter ce changement. Pour le point $N_7$ qui représente le point de fin de ligne, un code $a_7$ est mémorisé dans la mémoire $MCOD_1$ et un code $b_7$ est mémorisé dans la mémoire $MCOD_2$. Egalement, au point $N_7$, la méthode de propagation des coûts fait apparaître une erreur de codage affectée d'un coût $C_1$ pour l'état 1 du point $N_7$ et une erreur de codage affectée d'un coût $C_2$ pour l'état 2. Si l'on suppose toujours dans l'exemple montré à la figure 4, qu'au point $N_7$ le coût $C_1$ obtenu est inférieur au coût $C_2$, le procédé pour chercher le chemin optimal de codage va consister à lire le code situé dans l'une ou l'autre des mémoires $MCOD_1$ ou $MCOD_2$ en commençant par les mémoires de codes représentant les points dans l'état 1, c'est-à-dire par la mémoire $MCOD_1$ et à changer de mémoire lorsque dans la succession des codes lus un code de changement C est rencontré. Le trait en pointillés sur la figure 4 représente la succession des codes qui seront lus suivant ce principe. Ainsi la lecture de la mémoire $MCOD_1$ s'effectuera, dans un premier temps, du point $N_7$ au point $N_5$ et les codes $a_7$, $a_6$ et C seront lus, puis à l'indication de changement C du point $N_5$, la lecture de la mémoire code 1 sera interrompue et sera suivie par la lecture dans la mémoire $MCOD_2$ du point $N_4$ au point $N_2$ où les codes $b_4$, $b_3$ et C seront successivement lus. Arrivés au point $N_2$ où un code de changement est lu, la lecture de la mémoire $MCOD_2$ sera interrompue, pour être suivie par la lecture à nouveau de la mémoire $MCOD_1$ pour lire le code du point $N_1$. Ainsi le train de codes qui sera envoyé, sera défini par la suite des codes : $a_1$ c, $b_3$, $b_4$, c $a_6$, $a_7$. Naturellement le choix des valeurs reconstruites $XR_1$ et $XR_2$ à l'émetteur se fait en utilisant le même code de commutation ou de changement C.

Le système pour la mise en œuvre du procédé selon l'invention va maintenant être décrit à l'aide des figures 7 à 14. Le dispositif représenté à la figure 7 comprend : un dispositif 12 de propagation des coûts $C_1$ et $C_2$, ainsi qu'un dispositif 13 de calcul des codes et des valeurs reconstruites. Le dispositif 12 est constitué par deux circuits 14, 15 de propagation des coûts pour tous les points d'une ligne de l'image, lorsque, le calcul des erreurs de codage est effectué respectivement à l'aide de la première et de la deuxième caractéristique de quantification, $Q_1$ et $Q_2$, plaçant les points de l'image à coder respectivement dans les états 1 et 2 définis précédemment. Un circuit de propagation des coûts 14 calcule le coût global $C_{1(i)}$ pour arriver dans l'état 1 au point Ni, la valeur reconstruite $XR_{1(i)}$ du point Ni ainsi que le code $COD_{1(i)}$ obtenu correspondant au coût global $C_{1(i)}$. Le coût global $C_{1(i)}$ obtenu sur une sortie du circuit de propagation des coûts 14 est mémorisé par un circuit de mémorisation 16. De même la valeur reconstruite $XR_{1(i)}$ obtenue sur une sortie du circuit de propagation des coûts 14 est mémorisée à l'intérieur d'un circuit de mémorisation 17. De façon similaire, le circuit de propagation des coûts 15 calcule, le coût global $C_{2(i)}$ nécessaire pour placer le point Ni dans l'état 2, la valeur reconstruite $XR_{2(i)}$ correspondante obtenue à l'aide de la caractéristique de quantification $Q_2$ et le code $COD_2$ correspondant au coût global $C_{2(i)}$ obtenu. Le coût global $C_{2(i)}$ fourni par une sortie correspondante du circuit de propagation des coûts 15 est mémorisé à l'intérieur d'un circuit de mémorisation 18. De même la valeur reconstruite $XR_{2(i)}$ est obtenue sur une sortie du circuit de propagation 15 et est mémorisée à l'intérieur d'un circuit de mémorisation 19. Le calcul des coûts globaux $C_{1(i)}$ et $C_{2(i)}$, des valeurs reconstruites $XR_{1(i)}$ et $XR_{2(i)}$, des codes correspondants $COD_1$ et $COD_2$ sont effectués en fonction de la donnée courante $X_{(i)}$ du point à coder, des coûts globaux $C_{1(i-1)}$ $C_{2(i-1)}$ obtenus dans les calculs effectués sur le point Ni — 1 précédent et mémorisés respectivement dans les circuits de mémorisation 16 et 18, des valeurs reconstruites $XR_{1(i-1)}$ et $XR_{2(i-1)}$ de la donnée correspondante au point Ni — 1 précédent et mémorisé dans les circuits de mémorisation 17 et 19, ainsi qu'en fonction les valeurs reconstruites LP de la ligne précédente mémorisées dans un circuit de mémorisation 20.

Le dispositif 13 de calcul des codes et des valeurs reconstruites est constitué par un ensemble 21, 22, 23, 24 de registres piles du type FIFO, abréviation du terme anglo-saxon « First in-First out », d'un multiplexeur 25, d'un circuit de mémorisation 26 des valeurs reconstruites pour tous les points d'une ligne, d'un circuit de mémorisation 27 des codes à transmettre ainsi que d'un circuit de commande 28 des entrées du multiplexeur 25. Le circuit de commande 28 comprend un circuit d'initialisation 29 de l'état du multiplexeur en fin de ligne d'image, ainsi qu'un circuit 30 qui permet le changement d'état du multiplexeur chaque fois qu'un code de changement est rencontré, dans le parcours du chemin optimal de codage défini précédemment, en partant de l'état optimum pour le dernier point de la ligne. Le circuit d'initialisation 29 se compose d'un circuit 31 pour le calcul du coût global minimum fourni respectivement par les circuits de propagation des coûts 14 et 15 ainsi que d'un circuit 32 de mémorisation du coût global minimum obtenu à la fin d'une ligne d'image. Le circuit de changement d'état 30 du multiplexeur 25 est constitué par un décodeur 33 du code de changement C, relié par sa sortie à l'entrée d'un basculeur 34 qui change d'état chaque fois qu'un code de changement C est décodé par le codeur 33. Les sorties du circuit de mémorisation 32 et du basculeur 34 sont reliées respectivement aux entrées de commande $C_1$

et $C_2$ du multiplexeur 25. En fonction de l'état des sorties du circuit de mémorisation 32 et du basculeur 34 le multiplexeur 25 connecte la sortie de la mémoire pile 21 ou la sortie de la mémoire pile 23 à l'entrée du dispositif de mémorisation des valeurs reconstruites 26, il connecte également en fonction de ces états la sortie du registre de pile 22 ou la sortie du registre pile 24 à l'entrée du dispositif de mémorisation des codes à transmettre 27. De cette façon si le circuit 29 d'initialisation du multiplexeur constate en fin de ligne que le coût minimum de codage pour le dernier point a été obtenu par le circuit de propagation des coûts 14, la priorité de lecture des mémoires piles 21 à 24 sera donnée aux mémoires 21 et 22 qui contiennent empilés respectivement les valeurs reconstruites $XR_1$ et les codes $COD_1$ de tous les points placés dans l'état 1 de la ligne obtenus par utilisation de la première caractéristique de quantification $Q_1$. Ces valeurs successivement lues seront transférées successivement et respectivement dans les circuits de mémorisation des valeurs reconstruites 26 et dans le circuit de mémorisation 27 des codes à transmettre. Si en cours de lecture de la mémoire 22 un code de changement est rencontré et décodé par le décodeur 33, le basculeur 34 fait changer l'état du multiplexeur 25 et commute les entrées des circuits de mémorisation 26 et 27 sur les sorties des registres de pile 23 et 24 qui contiennent respectivement les valeurs reconstruites et les codes correspondants, des points placés dans l'état 2 calculés à l'aide de la caractéristique de quantification $Q_2$. Comme le basculeur 34 change d'état chaque fois qu'un code de changement est rencontré dans la lecture des registres piles 22 ou 24 on voit que le multiplexeur 25 commute les entrées 26 et 27 alternativement sur l'une des sorties des registres 21, 22 ou 23, 24 chaque fois qu'un code de changement est rencontré. Naturellement, l'initialisation du multiplexeur 25 pourra avoir lieu à partir du deuxième état du dernier point d'une ligne, dans le cas, où le circuit d'initialisation 29 constaterait en fin de ligne que le coût de codage du dernier point, fourni par le circuit de propagation des coûts 15, est inférieur à celui fourni par le circuit de propagation des coûts 14. Dans ce cas la lecture des codes à transmettre et des valeurs reconstruites commencerait par la lecture des mémoires piles 23 et 24.

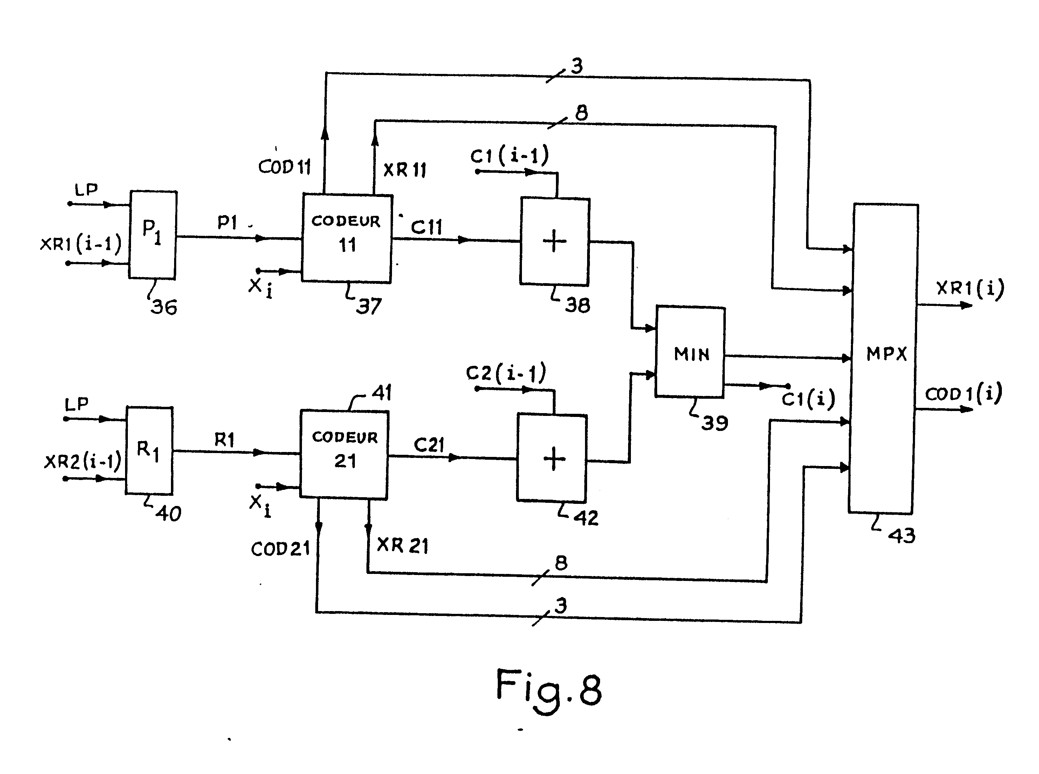

Le circuit de propagation des coûts 14 est représenté à la figure 8. Ce circuit comprend un circuit 36 de calcul d'une valeur de prédiction $P_1$ à l'aide d'une première caractéristique de prédiction relié par une première entrée à la sortie du circuit 20 de mémorisation des valeurs reconstruites de la ligne précédente et sur sa deuxième entrée à la sortie du circuit de mémorisation 17 de la valeur reconstruite $XR_{(i-1)}$ du point précédent. Le circuit 36 est également relié par sa sortie à une première entrée d'un circuit de calcul 37, de coût de codage $C_{11}$, lorsque la première caractéristique de quantification $Q_1$ est utilisée. Le circuit de calcul 37 est relié à une première entrée d'un additionneur 38, pour transmettre la valeur du coût $C_{11}$ calculé à l'additionneur 38. Une deuxième entrée de l'additionneur 38 est reliée à la sortie du circuit de mémorisation 16 qui contient le coût de codage $C_{1(i-1)}$ du point précédent lorsque la première caractéristique de quantification est utilisée. L'additionneur 38 effectue l'addition des coûts $C_{11}$ et $C_{(i-1)}$ et transmet le résultat à une première entrée d'un circuit 39 de calcul de coût global $C_{1(i)}$.

Le circuit de propagation des coûts 14 comprend également un circuit 40 de calcul de la valeur reconstruite $(R_1)$, relié par une première entrée à la sortie du circuit 20 de mémorisation des valeurs reconstruites de la ligne précédente et par sa deuxième entrée à la sortie du circuit de mémorisation 19 de la valeur reconstruite $XR_{2(i-1)}$ du point précédent, pour parvenir dans l'état 2 du point Ni. Le circuit 40 est également relié par sa sortie à une première entrée d'un circuit de calcul 41 du coût de codage $C_{21}$. Le circuit de calcul 40 est relié à une première entrée d'un additionneur 42 pour transmettre la valeur du coût $C_{21}$ calculé à l'additionneur 42. Une deuxième entrée de l'additionneur 42 est reliée à la sortie du circuit de mémorisation 18 qui contient le coût de codage $C_{2(i-1)}$ du point précédent lorque la deuxième caractéristique de quantification $Q_2$ est utilisée. L'additionneur 42 opère l'addition des coûts $C_{21}$ et $C_{2(i-1)}$ et transmet le résultat à une deuxième entrée du circuit 39 de calcul de coûts global $C_{1(i)}$.

Les circuits de calcul 37 et 41 calculent également respectivement les codes COD11 et COD21 ainsi que les valeurs reconstruites $XR_{11}$ et $XR_{21}$ correspondant aux coûts $C_{11}$ et $C_{21}$ calculés précédemment.

Un multiplexeur 43, commandé par la sortie du circuit 39 de calcul du coût global, connecte les sorties du circuit de calcul 37 fournissant la valeur de code $COD_{11}$ et la valeur reconstruite $XR_{11}$ ou connecte les sorties du circuit de calcul 41 fournissant la valeur de code $COD_{21}$ et la valeur reconstruite $XR_{21}$, aux entrées respectives des mémoires piles 22 et 21 de la figure 7.

Ainsi, lorsque le circuit de calcul 39 constate que le coût calculé par l'additionneur 38 est inférieur au coût calculé par l'additionneur 42, le multiplexeur 43 est commandé pour transmettre le code $COD_{11}$ et la valeur reconstruite calculée par le circuit 37 à l'entrée des mémoires piles 21 et 22. Dans le cas contraire, lorsque le coût calculé par l'additionneur 42 est inférieur au coût calculé par l'additionneur 38, seuls le code $COD_{21}$ et la valeur reconstruite $XR_{21}$, calculés par le dispositif de calcul 41 sont transmis aux entrées des mémoires piles 21 et 22.

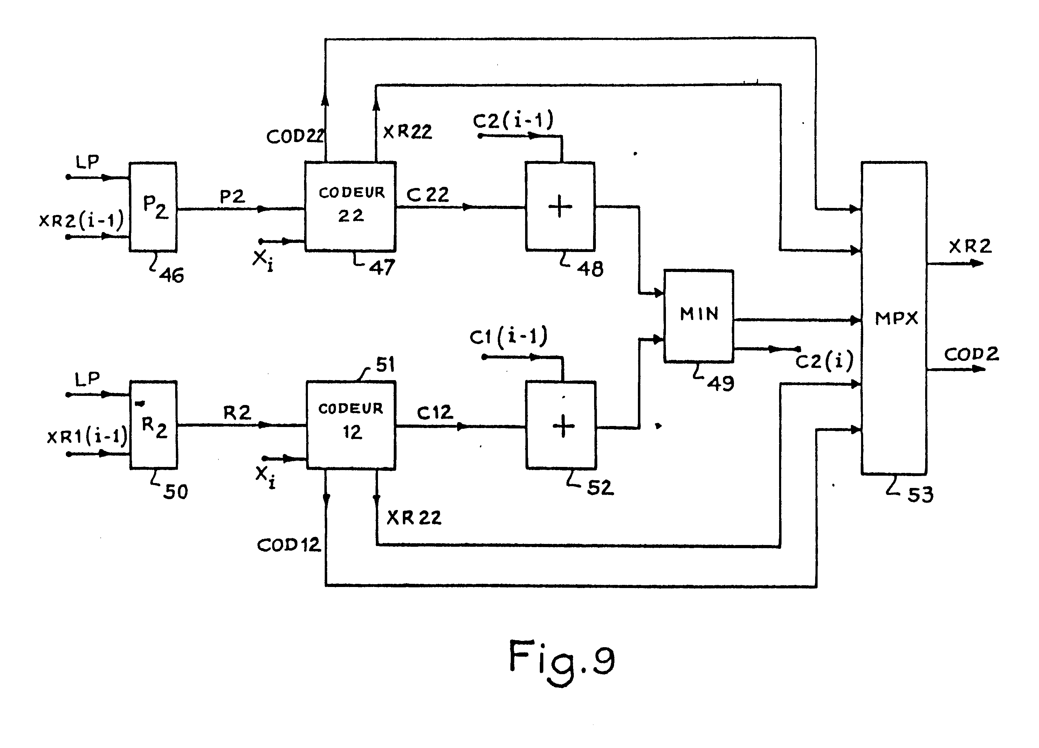

Le circuit 15 de propagation des coûts représentés à la figure 9 est identique au circuit 14 représenté à la figure 8, aux connexions d'entrée sortie près, du circuit 15, avec les autres éléments représentés à la figure 7. C'est pourquoi sur la figure 9, les mêmes éléments que ceux de la figure 8 sont représentés avec des références augmentées de dix. Par conséquent les liaisons entre les éléments 46 à 53 de la figure 9 n'ont pas besoin d'être plus longuement décrites. On rappellera cependant que le circuit 15, représenté à la figure 9, assure la propagation des coûts permettant de coder les points en utilisant la deuxième caractéristique de quantification $Q_2$, ce circuit réalisant la fonction

$$C_{2(i)} = \text{MIN} \ (C_{2(i-1)} + C_{22} \ ; \ C_{1(i-1)} + C_{12}).$$

Le coût $C_{22}$ est calculé par le circuit de calcul 47 en fonction de la valeur de prédiction $P_2$ fournie par le prédicteur 46 à l'aide d'une deuxième caractéristique de prédiction et en fonction de la donnée entrante du point courant $X_i$ en utilisant la deuxième caractéristique de quantification $Q_2$. Le circuit 47 fournit également le code $COD_{22}$ et la valeur reconstruite $XR_{22}$. Le circuit de calcul 51 calcule la valeur de coût $C_{12}$ attachée à l'utilisation d'une fonction de reconstruction qui est elle-même fonction de la valeur de la donnée entrante $X_i$ du point courant et d'une valeur reconstruite $R_2$ élaborée par le circuit de reconstruction 50. Le circuit de calcul 51 calcule également la valeur de code $COD_{12}$ et la valeur reconstruite $XR_{22}$ qui correspondent aux conditions de calcul du coût $C_{12}$. L'additionneur 48 additionne les valeurs de coûts $C_{22}$ et $C_{2(i-1)}$ et l'additionneur 52 effectue l'addition des coûts $C_{12}$ et $C_{1(i-1)}$. Le minimum des coûts globaux obtenus par les circuits 48 et 52 est calculé par le circuit de calcul 49 qui commande le multiplexeur 53, pour sélectionner, en fonction du résultat obtenu, une valeur de code et une valeur reconstruite, sur les sorties du circuit de calcul 47 ou sur les sorties du circuit de calcul 51. La valeur de code $COD_2$ et la valeur reconstruite $XR_2$ sélectionnées par le multiplexeur 53 sont transmises aux entrées des registres piles 23 et 24 de la figure 7. Le prédicteur 46 a une première entrée connectée à la sortie du circuit de mémorisation des valeurs reconstruites de la ligne précédente 20 et une deuxième entrée connectée à la sortie du circuit de mémorisation 19 du point précédent. Le circuit de reconstruction 50 a sa première entrée connectée à la sortie du circuit de mémorisation des valeurs reconstruites 20 et sa deuxième entrée connectée à la sortie du circuit de mémorisation 17 de la valeur reconstruite du point précédent.

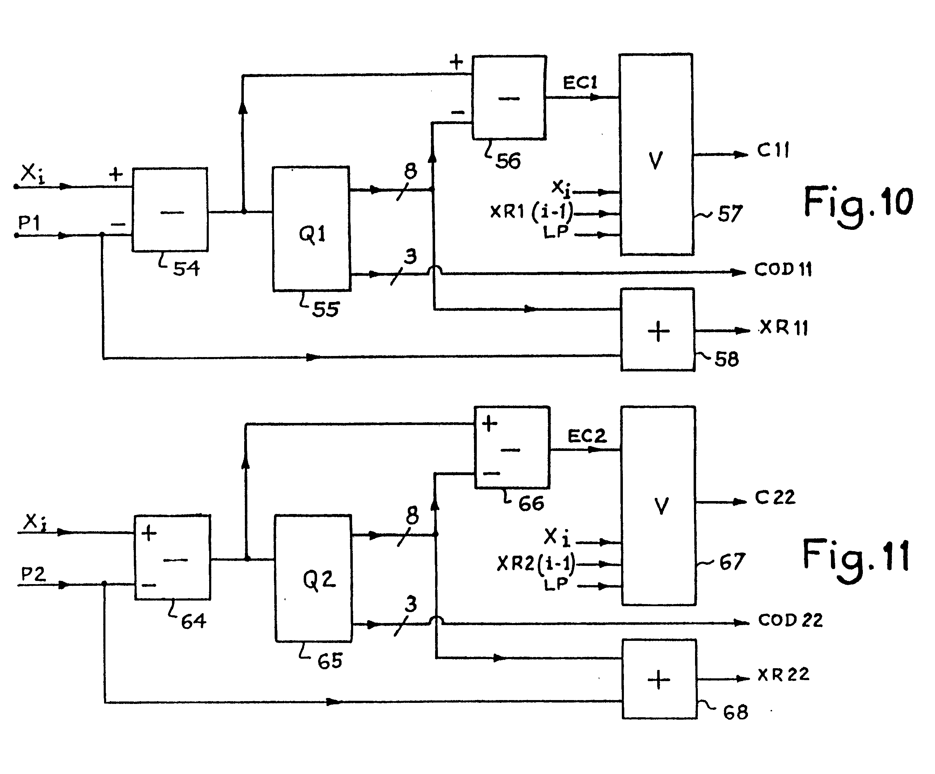

Un mode de réalisation du circuit de calcul 37 du coût $C_{11}$ de codage, pour passer, du codage du point Ni — 1 au codage du point Ni en utilisant la première caractéristique $Q_1$ de quantification, est représenté à la figure 10. Ce circuit comprend un soustracteur 54, un quantificateur 55, un dispositif de calcul d'erreur de codage 56, un dispositif 57 d'élaboration du code $C_{11}$ en fonction, de l'erreur de codage délivrée par le dispositif 56, de la donnée du point courant $X_i$, de la valeur reconstruite du point précédent $XR_{1(i-1)}$ et des valeurs reconstruites des points de la ligne précédente LP. Le dispositif de calcul comprend également, un dispositif 58 de calcul de la valeur reconstruite $XR_{11}$. Le soustracteur 54 reçoit sur une première entrée la valeur $X_i$ de la donnée représentant le point courant Ni et sur une deuxième entrée la valeur $P_1$ de la prédiction calculée par le prédicteur 36. Le soustracteur 54 délivre sur sa sortie une erreur de prédiction $X_i — P_1$ à l'entrée du quantificateur 55 de calcul du code $COD_{11}$ dont la caractéristique de quantification est celle qui correspond au graphe représenté à la figure 5. L'erreur de prédiction $X_i — P_1$ est également transmise à une première entrée du dispositif de calcul d'erreur de codage 56 qui reçoit sur sa deuxième entrée l'erreur de prédiction quantifiée fourni par le quantificateur 55. Le dispositif de calcul de l'erreur de codage peut être réalisé à l'aide d'un simple soustracteur. L'erreur de codage calculée par le dispositif de calcul de l'erreur de codage 56 est transmise sur les entrées d'adresse d'une mémoire morte programmable 57 adressée également en fonction de la valeur de la donnée $X_i$ du point Ni, des valeurs reconstruites des points voisins trouvés dans le registre 17, de la valeur reconstruite $XR_{1(i-1)}$ du point précédent ou dans les circuits de mémorisation 20 pour les valeurs reconstruites des points de la ligne précédente. La mémoire morte programmable 57 contient en mémoire les valeurs de coûts $C_{11}$ correspondant aux erreurs de codage supérieures au seuil de visibilité défini par une fonction de visibilité du type de celle représentée à la figure 2. Lorsque l'erreur de codage, délivrée par le circuit 56, est supérieure au seuil de visibilité correspondant à l'écart entre la donnée $X_i$ du point courant Ni et la valeur reconstruite des points voisins, un certain coût $C_{11}$ est délivré en sortie de la mémoire 57 et ce coût $C_{11}$ peut être nul si l'erreur de codage est inférieure au seuil de visibilité correspondant. Le dispositif de calcul de la valeur reconstruite 58 est dans l'exemple de la figure 10 réalisé à l'aide d'un simple additionneur qui additionne la valeur de la prédiction $P_1$ délivrée par le prédicteur 36 à l'erreur de prédiction quantifiée $Q(X — P_1)$ délivrée par le quantificateur 55 pour former la valeur reconstruite $XR_{11}$.

Un exemple de réalisation du circuit de calcul du coût $C_{22}$ est montré à la figure 11. Comme ce circuit est identique au circuit de la figure 10, les éléments de la figure 11 qui sont homologues aux éléments de la figure 10, sont représentés avec des références augmentées de 10. De façon similaire à la figure 10, la mémoire programmable 67 fournit un coût $C_{22}$ qui représente l'écart entre une erreur de codage calculée par le circuit 66 et un seuil de visibilité défini par une fonction de visibilité du type de celle représentée à la figure 2, en fonction de l'écart existant entre la donnée $X_i$ du point courant et des valeurs reconstruites des points voisins du point courant telle que, notamment, la valeur reconstruite $XR_{2(i-1)}$ du point précédent. L'erreur de codage, fournie par le circuit 66, correspond à la différence entre l'erreur de prédiction $X_i — P_2$ fournie par le soustracteur 64 et l'erreur de prédiction quantifiée $Q(X_i — P_2)$ fournie par le quantificateur 65 utilisant la deuxième caractéristique de quantification $Q_2$ pour calculer le code $COD_{22}$. La caractéristique de quantification $Q_2$ est conforme à celle représentée à la figure 6. Le quantificateur 65 délivre également sur sa sortie le code correspondant $COD_{22}$.

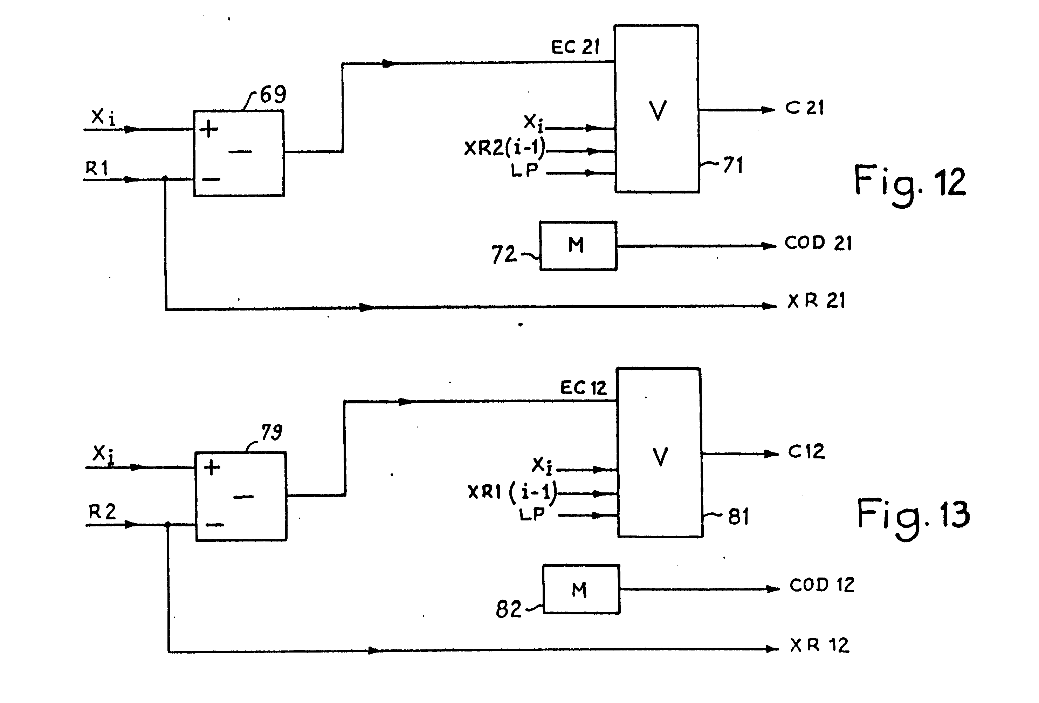

Le circuit de calcul du coût $C_{21}$ pour placer le point Ni + 1 dans l'état 1 en venant de l'état 2 du point Ni est représenté à la figure 12. Ce circuit comprend un soustracteur 69 recevant sur une première entrée la donnée $X_i$ à coder du point courant Ni et sur sa deuxième entrée la valeur reconstruite $R_1$ du point précédent en fonction des points voisins. Le soustracteur 69 est connecté par sa sortie à une entrée d'adressage d'une mémoire morte programmable 71 qui contient une fonction de visibilité de l'erreur de codage dont la sortie délivre une valeur de coût de codage $C_{21}$. La mémoire 72 contient le code $COD_{21}$ qui correspond au changement de quantificateur nécessité par cette opération, ce code $COD_{21}$ pourra, par exemple, avoir pour valeur la valeur binaire 111.

Le dispositif représenté à la figure 13 représente les détails de réalisation du dispositif de calcul 51 de codage du coût $C_{12}$ de la figure 9. Ce dispositif contient des éléments similaires à ceux déjà décrits à la figure 12, et portent par conséquent les références des éléments similaires de la figure 12 augmentées de 10. Le soustracteur 79 calcule l'erreur de codage $EC_{12}$ correspondant à la différence entre la donnée courante $X_i$ du point courant et la valeur reconstruite $R_2$ des points voisins fournis par le reconstructeur 50 de la figure 9. Le code $EC_{12}$ est transmis sur une ligne d'adresse de la mémoire morte programmable 81 qui contient une fonction de visibilité de l'erreur de codage, similaire à celle représentée à la figure 2, pour calculer le coût $C_{12}$ en fonction de l'erreur de codage $EC_{12}$ et des valeurs de la donnée du point courant $X_i$, des valeurs reconstruites du point précédent $XR_{1(i-1)}$ et des valeurs reconstruites de la ligne précédente trouvée dans le dispositif de mémorisation 20. Comme le coût $C_{12}$ calculé correspond à un changement d'état, la mémoire 82 contient le code de changement $COD_{12}$ qui comme dans le cas de la figure 12 correspond par exemple à la valeur binaire 111. La valeur reconstruite $XR_{12}$ est prise directement sur l'entrée du soustracteur 79 recevant la valeur reconstruite $R_2$.

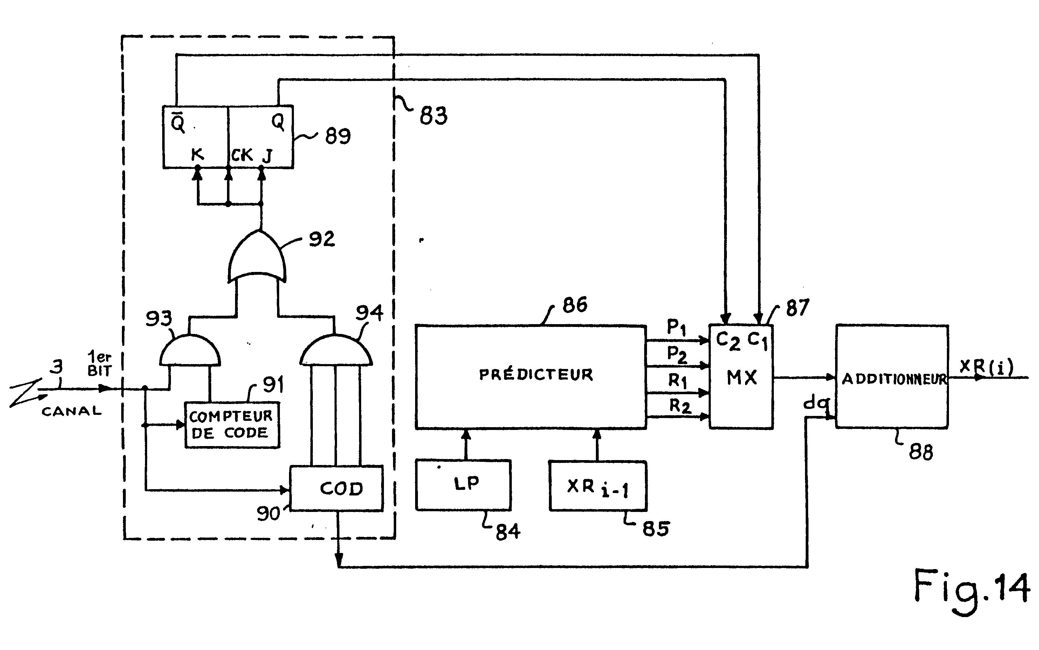

Le mode de réalisation du dispositif de réception est représenté à la figure 14. Le dispositif de réception comprend un organe de commande 83, un dispositif de mémorisation des valeurs reconstruites de la ligne précédente 84, un dispositif de mémorisation 85 de la valeur reconstruite $XR_{(i-1)}$ du point précédent, un prédicteur 86, un multiplexeur 87 et un additionneur 88. L'organe de commande 83 est constitué par un basculeur 89 de changement d'état de caractéristique de prédiction, un registre de mémorisation des codes 90 et un compteur de codes 91. L'entrée j du basculeur 89 est reliée à la sortie d'une porte OU 92 à deux entrées, la première entrée étant reliée au canal de transmission 3 par l'intermédiaire d'une porte ET à deux entrées 93. La deuxième entrée de la porte OU 92 est reliée à la sortie d'une porte ET 94 à trois entrées qui sont reliées respectivement aux sorties du registre de mémorisation des codes reçus 90. Le premier bit, reçu sur le canal de transmission 3, initialise le comptage du compteur de code 91 et positionne le basculeur 89 dans l'état 1 logique si le premier bit reçu a la valeur 1 logique, ou laisse dans l'état 0 logique le basculeur 89 lorsque le premier bit reçu a la valeur 0. Le basculeur 89 change ensuite d'état chaque fois qu'un changement de code est signalé par la valeur du code de changement c égale 111 provenant du canal de transmission. Le code de changement C est décodé par la porte ET 94 qui présente à sa sortie un état 1 logique lorsque le code de changement est mémorisé à l'intérieur du registre de code 90. Le prédicteur 86 calcule les valeurs de prédiction $P_1$ et $P_2$ et deux valeurs de données reconstruites $R_1$ et $R_2$. Ces valeurs sont calculées de façon identique à celles obtenues par le prédicteur de l'émetteur, à l'aide des valeurs des données reconstruites à la ligne précédente trouvées dans le registre 84 et de la valeur reconstruite du point précédent trouvée dans le registre 85. Le multiplexeur 87, commandé par les parties Q et $\bar{Q}$ du basculeur 89, sélectionne une des valeurs $P_1$, $P_2$, $R_1$ ou $R_2$ pour l'appliquer à une première entrée de l'additionneur 88 dont l'autre entrée est reliée à la sortie du registre de code 90 qui contient l'erreur de prédiction quantifiée $d_q$ transmise sur le canal de transmission 3. La valeur reconstruite correspondante est transmise à la sortie de l'additionneur 88.

Bien que les principes de la présente invention aient été décrits ci-dessus en relation avec des exemples particuliers de réalisation, il faut comprendre que la description n'est faite qu'à titre d'exemple et ne limite pas la portée de l'invention. En particulier, on comprendra que le procédé qui vient d'être décrit et qui consiste à opérer des commutations entre deux caractéristiques de quantification en fonction de l'allure locale du signal de télévision reste dans son principe le même si la commutation a lieu seulement sur des caractéristiques de prédiction ou des prédicteurs différents en utilisant pour le calcul des codes à transmettre une seule et même caractéristique de quantification pour placer chaque point selon deux états de codage différents. Egalement, l'architecture du dispositif de codage, représentée à la figure 7, pourra être réalisée suivant plusieurs variantes d'exécution qui seront dictées, dans la plupart des cas, par le choix des fonctions de prédiction $(P_1P_2)$ et de reconstruction $(R_1R_2)$ des prédicteurs (36, 46) et reconstructeurs (40, 50). Dans le cas où les fonctions de prédiction et de reconstruction consistent simplement à réutiliser la valeur de la donnée du point précédemment reconstruite dans la ligne, les dispositifs qui viennent d'être décrits n'auront pas à subir d'adaptation particulière, tout le traitement pouvant se faire en prenant deux lignes de retard, l'émission des codes de la ligne J étant effectuée simultanément, au calcul des codes relatifs aux points de la ligne J + 1 par le dispositif 13 et à la propagation des coûts de codage relatifs aux points de la ligne J + 2 par le dispositif 12.

Par contre, dans le cas où les fonctions de prédiction et de reconstruction prennent en compte les données reconstruites des points de la ligne précédente, la séquence de transmission et de préparation des codes qui vient d'être décrite, ne pourra être utilisée, car pour propager les coûts de la ligne J il faut disposer des valeurs reconstruites de la ligne précédente qui ne seront disponibles qu'au moment de l'exploration des points de la ligne J + 2 et dans ce cas le retard se cumule.

Pour remédier à cet inconvénient, une première solution pourra consister à utiliser une mémoire d'image, pour mémoriser la première et la deuxième trame de l'image, l'émission des codes de la ligne J de la première trame et le calcul des codes de la ligne J de la deuxième trame s'effectuant simultanément pendant la propagation des coûts de la ligne J + 1 de la première trame et inversement l'émission des codes de la ligne J de la deuxième trame et le calcul des codes de la ligne J + 1 de la première trame s'effectuant simultanément pendant la propagation des coûts de la ligne J + 1 de la deuxième trame. Une deuxième solution consiste à coder les lignes de l'image alternativement dans un sens et dans l'autre en utilisant une mémoire ligne, de cette façon les valeurs reconstruites de la ligne précédente sont disponibles pour la propagation des coûts de codage de la ligne suivante.

**Revendications**

1. Procédé de compression de débit de données successivement transmises entre un émetteur et un récepteur de télévision, les données étant représentatives des valeurs de luminance ou de chrominance de chaque point d'une image de télévision et étant codées à l'émetteur par un dispositif de codage différentiel (1) du type comprenant au moins un prédicteur (4), un quantificateur (5), un dispositif (6) de reconstruction de la donnée transmise et un allocateur de code (7) et décodées au récepteur par un décodeur différentiel (2) comprenant au moins un transformateur de codes (9), un prédicteur (10) et un dispositif (11) de reconstruction de la donnée transmise, le procédé consistant à déterminer avant l'émission les codes à transmettre en fonction d'au moins deux caractéristiques différentes $Q_1$ et $Q_2$ de quantification et/ou de prédiction $P_1$ et $P_2$ les unes à niveaux de quantification et/ou de prédiction très resserrés dans les zones uniformes de l'image et les autres à niveaux plus larges pour coder les zones contours de l'image et à transmettre l'indication de changement C de caractéristique au récepteur lorsque le codage de la donnée est obtenu en utilisant une caractéristique différente de celle qui a été utilisée pour la donnée précédemment transmise, caractérisé en ce qu'il consiste à transmettre l'indication de changement de caractéristique de quantification et/ou de prédiction à la place de la donnée relative au point pour lequel intervient ce changement et à reconstruire dans le récepteur la donnée non transmise en fonction des données correspondantes des points précédents, déjà reçues par le récepteur.

2. Procédé selon la revendication 1, caractérisé en ce que le codage des données consiste à établir les coûts de codage et les codes correspondants des données de chaque point à transmettre pour chacune des caractéristiques de quantification et/ou de prédiction utilisée, chaque coût étant obtenu par une mesure du dépassement de l'erreur de codage de chaque point au-dessus d'un seuil de visibilité pour lequel l'erreur devient apparente sur l'image reçue, à définir une première suite $C_{1(i)}$ de coûts pour coder les données de chaque point en utilisant une première caractéristique et une deuxième suite $C_{2(i)}$ de coûts pour coder les données de chaque point en utilisant une deuxième caractéristique, chaque coût d'une suite étant obtenu à partir des coûts obtenus correspondants au codage du point précédent en déterminant le minimum des coûts calculés en fonction soit du coût précédent de la même suite ou du coût précédent de l'autre suite, à repérer dans chaque suite à l'aide d'un code de changement (C) chaque coût minimum qui est obtenu à partir du coût de codage du point précédent de l'autre suite et à ranger les codes à transmettre correspondants aux coûts calculés de l'une ou l'autre suite en déterminant un chemin de codage pouvant alterner sur l'une ou l'autre suite, en commençant par les codes de la suite dont le dernier coût calculé est inférieur au coût correspondant de l'autre suite et en continuant successivement par les codes de l'autre suite dès qu'un code de changement dans une suite est rencontré.

3. Système de compression de débit de données successivement transmises entre un émetteur et un récepteur reliés entre eux par un canal de transmission (3) pour la mise en œuvre du procédé selon les revendications 1 et 2, caractérisé en ce que le dispositif (1) de codage différentiel de l'émetteur comprend, un dispositif (12) de propagation des coûts pour calculer le coût de codage de chaque point en fonction d'une part d'une première et d'une deuxième caractéristique de quantification et/ou de prédiction et d'autre part en fonction des coûts de codage déterminés pour les points précédents, ainsi qu'un dispositif de calcul (13) des codes et des valeurs reconstruites pour sélectionner les codes à transmettre suivant un chemin de codage pour lequel la propagation des coûts est minimum.

4. Système selon la revendication 3, caractérisé en ce que le dispositif (12) de propagation des coûts comprend un premier circuit (14) de propagation des coûts pour calculer la première suite de coût et pour coder les données de chaque point en utilisant la première caractéristique de quantification $Q_1$, et par un deuxième circuit (15) de propagation des coûts pour calculer la deuxième suite des coûts et pour coder les données de chaque point en utilisant la deuxième caractéristique de quantification $Q_2$.

5. Système selon les revendications 3 et 4, caractérisé en ce que le dispositif de calcul (13) des codes et des valeurs reconstruites comprend un premier ensemble (21, 22) d'éléments de mémorisation des codes et des valeurs reconstruites correspondantes fournis par le premier circuit (14) de propagation des coûts, un deuxième ensemble (23, 24) d'éléments de mémorisation des codes et des valeurs reconstruites correspondantes fournis par le deuxième circuit (15) de propagation des coûts, les premier et deuxième moyens de mémorisation étant organisés en pile, ainsi qu'un multiplexeur (25) pour lire les codes à émettre dans l'un ou l'autre ensemble de mémorisation, la lecture des codes successivement rangés dans un élément de mémorisation étant interrompue pour lire les codes de rangs suivants rangés dans l'autre élément de mémorisation dès qu'un code de changement C est rencontré dans la suite des codes

**0 104 963**

contenus dans l'élément de mémorisation qui est en cours de lecture.

6. Système selon l'une quelconque des revendications 3 à 5, caractérisé en ce que la lecture des éléments de mémorisation (21, 22, 23, 24) des codes et des valeurs reconstruites est commandée en fin de ligne d'image par un circuit d'initialisation (29), et commence par l'élément de mémorisation qui a été chargé par le circuit de propagation des coûts dont le coût de codage propagé au dernier point de la ligne est minimum.

7. Système selon l'une quelconque des revendications 3 à 6, caractérisé en ce qu'un circuit de propagation des coûts (14, 15) comprend un premier circuit (37, 47) de calcul du coût de codage du point de l'image courant à partir de la valeur reconstruite de la donnée correspondant au point précédent en utilisant la même caractéristique de quantification que celle utilisée pour le codage du point de l'image précédent, le premier circuit (37, 47) de calcul du coût de codage étant relié par sa sortie à une première entrée d'un additionneur (38, 48) dont l'autre entrée est reliée à un dispositif de mémorisation (16, 18) du coût de codage du point d'image précédent effectué en utilisant la même caractéristique de quantification, un deuxième circuit (41, 51) de calcul d'un coût de codage effectué à partir de la valeur reconstruite de la donnée du point d'image précédent obtenu à partir d'une caractéristique de quantification différente de celle utilisée par le premier circuit (37, 47) de calcul du coût de codage, le deuxième circuit de calcul (41, 51) contenant en mémoire un code de changement de caractéristique de quantification et étant relié par sa sortie à une première entrée d'un deuxième additionneur (42, 52) dont l'autre entrée est reliée à un circuit de mémorisation (18) du coût de codage du point précédent lorsque le codage est obtenu en utilisant une caractéristique de quantification différente de celle utilisée par le premier circuit (37, 47) de calcul, les sorties des premier (38, 48) et deuxième (42, 52) additionneurs étant reliées aux entrées d'un circuit (39) de calcul de coût global pour déterminer le plus petit des coûts fournis par les sorties des premier (38, 48) et deuxième (42, 52) additionneurs, pour sélectionner le code et la valeur reconstruite fournis par le premier (37, 47) ou le deuxième (41, 51) circuits de calcul de coût de codage qui délivre le plut petit coût et pour transférer la valeur du code et la valeur reconstruite sélectionnée dans les éléments de mémorisation correspondants du dispositif de calcul des codes et des valeurs reconstruites (13).

8. Système selon la revendication 7, caractérisé en ce que le premier circuit de calcul des coûts de codage du point de l'image courant comprend une mémoire morte (57, 67) dans laquelle sont mémorisées les valeurs des coûts correspondant aux erreurs de codage supérieures aux seuils de visibilité de ces erreurs obtenu en utilisant une première ou une deuxième caractéristique de quantification, la mémoire morte étant adressée, d'une part, par un dispositif (56, 66) de calcul d'erreur de codage effectuant la différence entre l'erreur de prédiction du point courant à coder et sa valeur quantifiée à l'aide d'une caractéristique de quantification, et d'autre part, par les valeurs des données du point courant de l'image et de celles des points voisins reconstruites.

9. Système selon la revendication 7, caractérisé en ce que le deuxième circuit de calcul des coûts de codage du point de l'image courant comprend une mémoire morte (71, 81) dans laquelle sont mémorisées les valeurs des coûts correspondants aux erreurs de codage supérieures aux seuils de visibilité de ces erreurs, lorsque, le code du point courant est remplacé par un code de changement de caractéristique, la mémoire morte (71, 81) étant adressée, d'une part, par un dispositif (69, 79) de calcul d'erreur de codage effectuant la différence entre la donnée représentant le point courant et sa valeur reconstruite en fonction des valeurs des données des points précédents et d'autre part, par les valeurs des données du point courant et de celles des points voisins reconstruites.

10. Système selon l'une quelconque des revendications 3 à 8, caractérisé en ce que le dispositif de décodage du récepteur est un dispositif décodeur différentiel double comprenant un prédicteur (86) pour le calcul des deux valeurs de prédiction $P_1$ et $P_2$ et de deux valeurs reconstruites $R_1$ et $R_2$ calculées de façon identique à celles de l'émetteur et sélectionnées l'une ou l'autre chaque fois qu'un code de changement est reçu par le récepteur.

11. Système selon l'une quelconque des revendications 3 à 10, caractérisé en ce que les première et deuxième caractéristiques de quantification sont identiques et que les dispositifs de calcul des codes utilisent des caractéristiques de prédiction différentes.

**Claims**

1. Flow rate compression method for data sucessively transmitted between a television transmitter and receiver, the data being representative of luminance or chrominance values of each point of a television image and being encoded at the transmitter by a differential encoding device (1) of the type comprising at least one predictor (4), one quantifier (5), a device (6) for the reconstruction of the transmitted data and a code allocator (7), and decoded at the receiver by a differential decoder (2) comprising at least one code transformer (9), a predictor (10) and a device (11) for the reconstruction of the transmitted data, the method consisting in determining prior to the transmission the codes to be transmitted in function of at least two different quantification characteristics $Q_1$ and $Q_2$ and/or prediction characteristics $P_1$ and $P_2$, some at very close quantification and/or prediction levels within the uniform zones of the image and some at wider levels to code the contour zones of the image, and in transmitting

11

the indication of change C of characteristic to the receiver when the encoding of the data is obtained by using a characteristic different of that which has been used for the data precedingly transmitted, characterized in that it consists in transmitting the indication of change of quantification and/or prediction characteristic in place of the data relating to the point wherefor this change has occurred, and in reconstructing, in the receiver, the non-transmitted data in function of the corresponding data of the preceding points already received by the receiver.

2. Method according to claim 1, characterized in that the encoding of the data consists in establishing the encoding costs and the corresponding codes of data of each point to be transmitted for each quantification and/or prediction characteristic used, each cost being obtained by measuring the excess of the encoding error of each point beyond a visibility threshold for which the error becomes apparent in the received image, in defining a first sequence $C_{1(i)}$ of costs for coding the data of each point using a first characteristic and a second sequence $C_{2(i)}$ of costs for coding the data of each point using a second characteristic, each cost of a sequence being obtained from obtained costs corresponding to the encoding of the preceding point by determination of the minimum of costs calculated as a function either of the preceding cost of the same sequence or of the preceding cost of the other sequence, detecting in each sequence by means of a change code (C) each minimum cost which is obtained from the encoding cost of the preceding point of the other sequence, and in ranging the codes to be transmitted corresponding to the calculated costs of one or the other sequence by determining an encoding path which is capable of alternating on one or the other sequence, beginning with the codes of the sequence whereof the last calculated cost is smaller than the corresponding cost of the other sequence, and successively continuing with the codes of the other sequence as soon as one change code is encountered in one sequence.

3. Flow rate compression system for data successively transmitted between a transmitter and a receiver interconnected by a transmission channel (3), for performing the method of claims 1 or 2, characterized in that the differential encoding device (1) of the transmitter comprises a device (2) for the propagation of costs to calculate the encoding cost of each point in function of, on the one hand, a first and a second quantification and/or prediction characteristic and, on the other hand, is function of the encoding costs determined for the preceding points, as well as a device (13) for the calculation of the codes and the reconstructed values to select the codes to be transmitted according to an encoding path wherefor the propagation of the costs in minimum.

4. System according to claim 3, characterized in that the device (12) for the propagation of costs comprises a first costs propagation circuit (14) to calculate the first sequence of costs and to encode the data of each point by using the first quantification characteristic $Q_1$, and a second costs propagation circuit (15) to calculate the second sequence of costs and to encode the data of each point by using the second quantification characteristic $Q_2$.

5. System according to claims 3 and 4, characterized in that the device (13) for the calculation of the codes and the reconstructed values comprises a first set (21, 22) of members for storing the codes and the corresponding reconstructed values supplied by the first costs propagation circuit (14), a second set (23, 24) of members for storing the costs and the corresponding reconstructed values supplied by the second costs propagation circuit (15), the first and second storing members being organized in stack type, as well as a multiplexer (25) for reading the codes to be transmitted from one or the other storing set, the reading of the codes successively ranged in one storing member being interrupted to read the codes of following orders ranged in the other storing member as soon as a change code (C) is encountered in the sequence of codes contained in the storing member currently read.

6. System according to any of claims 3 to 5, characterized in that the reading of the codes and the reconstructed values from the storing members (21, 22, 23, 24) is controlled at the end of the image line by an initialization circuit (29), and starts with the storing member which has been loaded by the costs propagation circuit of which the propagated encoding cost at the last point of the line is minimum.

7. System according to any of claims 3 to 6, characterized in that a costs propagation circuit (14, 15) comprises a first circuit (37, 47) for calculating the encoding cost of the current image point from the reconstructed value of the data corresponding to the preceding point by using the same quantification characteristic as that used for the encoding of the preceding image point, the first circuit (37, 47) for calculating the encoding costs being connected on its output to a first input of an adder (38, 48) the other input of which is connected to a storing device (16, 18) for storing the encoding cost of the preceding image point when the encoding is made by using the same quantification characteristic, a second circuit (41, 51) for calculating an encoding cost when the encoding is made starting from the reconstructed value of the data of the preceding image point obtained from a quantification characteristic different of that used by the first circuit (37, 47) for calculating the encoding cost, the second calculating circuit (41, 51) holding in memory a quantification characteristic change code and being connected on its output to a first input of a second adder (42, 52) the other input of which is connected to a circuit (18) for storing the encoding cost of the preceding point when the encoding is obtained by using a quantification characteristic different of that used by the first calculation circuit (37, 47), the outputs of the first (38, 48) and second (42, 52) adders being connected to the inputs of a circuit (39) for calculating the overall costs to determine the smallest of the costs supplied by the outputs of the first (38, 48) and second (42, 52) adders, to select the code and reconstructed value supplied by the first (37, 47) or the second (41, 51)

**0 104 963**

circuits for calculating the encoding cost which supplies the smaller cost, and to transfer the value of the code and the selected reconstructed value into the corresponding storing members of the device for calculating the codes and the reconstructed values (13).

8. System according to claim 7, characterized in that the first circuit for calculating the encoding costs of the current image point comprises a read-only-memory (57, 67) storing the values of costs corresponding to the encoding errors exceeding the visibility thresholds of these errors when a first or a second quantification characteristic is used, the read-only-memory being addressed, on the one hand, by a device (56, 66) for calculating the encoding error forming the difference between the prediction error of the current point to be encoded and its value quantified by means of a quantification characteristic, and, on the other hand, by the values of the data of the current image point and those of the reconstructed adjacent points.

9. System according to claim 7, characterized in that the second circuit for calculating the encoding costs of the current image point comprises a read-only-memory (71, 81) storing the values of costs corresponding to encoding errors exceeding the threshold visibility of these errors when the code of the current point is replaced by a characteristic change code, the read-only-memory (71, 81) being addressed, on the one hand, by a device (69, 79) for calculating the encoding error forming the difference between the data representing the current point and its value reconstructed in function of the values of the data of the preceding point, and, on the other hand, by the values of the data of the current point and those of the reconstructed adjacent points.

10. System according to any of claims 3 to 8, characterized in that the encoding device of the receiver is a differential double decoder device comprising a predictor (86) for calculating the two prediction values $P_1$ and $P_2$ and the two reconstructed values $R_1$ and $R_2$ calculated in a manner identical to that of the transmitter, and one or the other being selected each time a change code is received by the receiver.

11. System according to any of claims 3 to 10, characterized in that the first and second quantification characteristics are identical and that the code calculation devices use different prediction characteristics.

**Patentansprüche**

1. Verfahren zur Kompression des Durchsatzes von Daten, die nacheinander zwischen einem Fernsehsender und -empfänger übertragen werden, wobei diese Daten repräsentativ für die Luminanz- oder Chrominanzwerte jedes Punktes eines Fernsehbildes sind und sendeseitig codiert werden durch eine differentielle Codiervorrichtung (1) vom Typ mit wenigstens einer Vorhersageeinrichtung (4), einem Quantifizierer (5), einer Vorrichtung (6) zur Rekonstruktion der übertragenen Datengröße und einem Codezuweiser (7), sowie empfangsseitig decodiert werden durch einen differentiellen Decoder (2), der wenigstens einen Codeumsetzer (9), eine Vorhersageeinrichtung (10) und eine Vorrichtung (11) für die Rekonstruktion der übertragenen Datengröße aufweist, wobei das Verfahren darin besteht, vor dem Aussenden die zu übertragenden Codes zu bestimmen in Abhängigkeit von wenigstens zwei verschiedenen Quantifizierungscharakteristiken $Q_1$ und $Q_2$ und/oder Vorhersagecharakteristiken $P_1$ und $P_2$, von denen die einen Quantifizierungs- und/oder Vorhersageniveaus aufweisen, die in den gleichförmigen Bildzonen sehr nahe beieinanderliegen, und die anderen höhere Niveaus aufweisen, um die Konturzonen des Bildes zu codieren, sowie die Anzeige der Veränderung C einer Charakteristik zu dem Empfänger zu übertragen, wenn die Codierung der Datengröße erhalten wird, indem eine Charakteristik verwendet wird, die verschieden von derjenigen ist, welche für die zuvor übertragene Datengröße verwendet wurde, dadurch gekennzeichnet, daß es darin besteht, die Anzeige der Veränderung einer Quantifizierungs- und/oder Vorhersagecharakteristik anstelle der Datengröße zu übertragen, welche denjenigen Punkt betrifft, für den diese Veränderung auftritt, und im Empfänger die nicht übertragene Datengröße zu rekonstruieren in Abhängigkeit von den entsprechenden Daten der vorausgehenden, vom Empfänger bereits empfangenen Punkte.

2. Verfahren nach Anspruch 1, dadurch gekennzeichnet, daß die Codierung der Daten darin besteht, den jeweiligen Aufwand und die entsprechenden Codes für die Daten jedes zu übertragenden Punktes für jede verwendete Quantifizierungs- und/oder Vorhersagecharakteristik zu bestimmen, wobei jeder Aufwand erhalten wird durch eine Messung der Überschreitung des Codierfehlers jedes Punktes über einen Sichtbarkeitsschwellwert, für welchen der Fehler in dem empfangenen Bild sichtbar wird, eine erste Folge $C_{1(i)}$ von Aufwänden zum Codieren der Daten jedes Punktes unter Verwendung einer ersten Charakteristik und eine zweite Folge $C_{2(i)}$ von Aufwänden zum Codieren der Daten jedes Punktes unter Verwendung einer zweiten Charakteristik zu definieren, wobei jeder Aufwand einer Folge aus den der Codierung des vorausgehenden Punktes entsprechenden erhaltenen Aufwänden erhalten wird, indem das Minimum der Aufwände bestimmt wird, welche berechnet wurden in Abhängigkeit entweder von dem vorhergehenden Aufwand derselben Folge oder von dem vorhergehenden Aufwand der anderen Folge, in jeder Folge mittels eines Änderungscodes (C) jeden minimalen Aufwand herauszufinden, der aus dem Codieraufwand des vorhergehenden Punktes der anderen Folge erhalten wird, und die zu übertragenden, den berechneten Aufwänden der einen oder anderen Folge entsprechenden Codes einzureihen, indem ein Codierweg bestimmt wird, der auf die eine oder andere Folge alternieren kann, beginnend mit den

13

**0 104 963**

Codes derjenigen Folge, deren erster berechneter Aufwand kleiner als der entsprechende Aufwand der anderen Folge ist, und fortfahrend nacheinander mit den Codes der anderen Folge, sobald ein Änderungscode in einer Folge angetroffen wird.

3. System zur Kompression des Durchsatzes von Daten, die nacheinander zwischen einem Sender und einem Empfänger übertragen werden, welche miteinander durch einen Übertragungskanal (3) verbunden sind, zur Durchführung des Verfahrens nach den Ansprüchen 1 und 2, dadurch gekennzeichnet, daß die differentielle Codiervorrichtung (1) des Empfängers eine Vorrichtung (12) für die Propagation der Aufwände, um den Codieraufwand jedes Punktes zu berechnen in Abhängigkeit einerseits von einer ersten und einer zweiten Quantifizier- und/oder Vorhersagecharakteristik und andererseits in Abhängigkeit von den für die vorhergehenden Punkte bestimmten Codieraufwänden, sowie eine Rechenvorrichtung (13) umfaßt, um die Codes und die rekonstruierten Werte zu berechnen und die Codes zu selektieren, welche über einen Codierweg zu übertragen sind, für welchen die Propagation der Aufwände minimal ist.

4. System nach Anspruch 3, dadurch gekennzeichnet, daß die Vorrichtung (12) für die Propagation der Aufwände eine erste Schaltung (14) für die Propagation der Aufwände umfaßt, um die erste Folge von Aufwänden zu berechnen und um die Daten jedes Punktes zu codieren, indem die erste Quantifizierungscharakteristik $Q_1$ verwendet wird, und mit einer zweiten Schaltung (15) für die Propagation der Aufwände zum Berechnen der zweiten Folge von Aufwänden und zum Codieren der Daten jedes Punktes unter Verwendung der zweiten Quantifiziercharakteristik $Q_2$.

5. System nach den Ansprüchen 3 und 4, dadurch gekennzeichnet, daß die Rechenvorrichtung (13) zur Berechnung der Codes und der rekonstruierten Werte eine erste Gruppe (21, 22) von Elementen zur Speicherung der Codes und der entsprechenden rekonstruierten Werte, die von der ersten Schaltung (14) für die Propagation der Aufwände geliefert werden, eine zweite Gruppe (23, 24) von Elementen zur Speicherung der Codes und der entsprechenden rekonstruierten Werte, welche durch die zweite Schaltung (15) für die Propagation der Aufwände geliefert werden, wobei die ersten und die zweiten Speichermittel stapelartig organisiert sind, sowie einen Multiplexer (25) umfaßt, um die auszusendenden Codes in der einen oder anderen Speichergruppe auszulesen, wobei das Auslesen der Codes, die nacheinander in ein Speicherelement eingereiht sind, unterbrochen wird, um die Codes der darauffolgenden Ränge, die in dem anderen Speicherelement eingereiht sind, auszulesen, sobald ein Veränderungscode C in der Folge von Codes angetroffen wird, die in dem Speicherelement enthalten sind, welches gerade ausgelesen wird.

6. System nach einem der Ansprüche 3 bis 5, dadurch gekennzeichnet, daß das Auslesen der Codes und der rekonstruierten Werte aus den Speicherelementen (21, 22, 23, 24) am Ende einer Bildzeile durch eine Initiierschaltung (29) gesteuert wird und mit dem Speicherelement beginnt, welches durch die Schaltung für die Propagation der Aufwände geladen wird, bei welcher der propagierte Codieraufwand am letzten Punkt der Zeile minimal ist.

7. System nach einem der Ansprüche 3 bis 6, dadurch gekennzeichnet, daß eine Schaltung (14, 15) für die Propagation der Aufwände eine erste Schaltung (37, 47) zur Berechnung des Codieraufwandes des laufenden Bildpunktes aus dem rekonstruierten Wert der dem vorausgehenden Punkt entsprechenden Datengröße unter Verwendung derselben Quantifiziercharakteristik wie diejenige, welche für die Codierung des vorausgehenden Bildpunktes verwendet wurde, wobei die erste Schaltung (37, 47) zur Berechnung des Codieraufwandes mit ihrem Ausgang an einen ersten Eingang eines Addierers (38, 48) angeschlossen ist, dessen anderer Eingang mit einer Vorrichtung (16, 18) zur Speicherung des Codieraufwandes des vorausgehenden Bildpunktes, welcher unter Verwendung derselben Quantifiziercharakteristik erhalten wird, verbunden ist, und eine zweite Schaltung (41, 51) zur Berechnung eines Codieraufwandes aus dem rekonstruierten Wert der Datengröße des vorausgehenden Bildpunktes umfaßt, welcher aus einer Quantifizierungscharakteristik erhalten wird, die verschieden von derjenigen ist, welche von der ersten Schaltung (37, 47) zur Berechnung des Codieraufwandes verwendet wurde, wobei die zweite Rechenschaltung (41, 51) einen Quantifiziercharakteristik-Änderungscode gespeichert hält und an ihrem Ausgang mit einem ersten Eingang eines zweiten Addierers (41, 52) verbunden ist, dessen anderer Eingang verbunden ist mit einer Schaltung (18) zur Speicherung des Codieraufwandes des vorausgehenden Punktes, wenn die Codierung erhalten wird, indem eine Quantifiziercharakteristik verwendet wird, welche verschieden von derjenigen ist, die in der ersten Rechenschaltung (37, 47) verwendet wurde, wobei die Ausgänge des ersten (38, 48) und des zweiten (42, 52) Addierers mit den Eingängen einer Schaltung (39) zur Berechnung des Gesamtaufwandes verbunden sind, um den kleinsten der Aufwände zu bestimmen, welche von den Ausgängen des ersten (38, 48) und des zweiten (42, 52) Addierers geliefert werden, um denjenigen Code und rekonstruierten Wert, welcher von der ersten (37, 47) oder der zweiten (41, 51) Schaltung zur Berechnung des Codieraufwandes geliefert werden, auszuwählen, welcher den kleinsten Aufwand ergibt, und um den Wert des Codes und den rekonstruierten ausgewählten Wert zu den entsprechenden Speicherelementen der Vorrichtung zur Berechnung des Codes und der rekonstruierten Werte (13) zu übertragen.

8. System nach Anspruch 7, dadurch gekennzeichnet, daß die erste Schaltung zur Berechnung der Codieraufwände des laufenden Bildpunktes einen Festwertspeicher (57, 67) umfaßt, in welchem die Werte der Aufwände gespeichert sind, die den Codierfehlern entsprechen, welche oberhalb der Sichtbarkeits-Schwellwerte für diese Fehler liegen, erhalten unter Anwendung einer ersten oder zweiten Quantifiziercharakteristik, wobei der Festwertspeicher einerseits adressiert wird durch eine Vorrichtung (56, 66) zur Codierfehlerberechnung, welche die Differenz zwischen dem Vorhersagefehler für den laufenden zu codierenden Punkt und seinem Wert bildet, der mittels einer Quantifiziercharakteristik quantifiziert wurde, und andererseits durch die Datenwerte des laufenden Bildpunktes und der benachbarten rekonstruierten Punkte.

9. System nach Anspruch 7, dadurch gekennzeichnet, daß die zweite Schaltung zur Berechnung der Codieraufwände für den laufenden Bildpunkt einen Festwertspeicher (71, 81) umfaßt, worin die Werte der Aufwände gespeichert sind, welche den Codierfehlern entsprechen, die oberhalb der Sichtbarkeits-schwellwerte für diese Fehler liegen, wenn der Code des laufenden Punktes ersetzt wird durch einen Charakteristik-Änderungs-Code, wobei dieser Festwertspeicher (71, 81) einerseits adressiert wird durch eine Vorrichtung (69, 79) zur Berechnung des Codierfehlers, welche die Differenz zwischen der den laufenden Punkt darstellenden Datengröße und ihrem in Abhängigkeit von den Datenwerten der vorausgehenden Punkte rekonstruierten Wert bildet, und andererseits adressiert wird durch die Werte der Daten des laufenden Punktes und der rekonstruierten benachbarten Punkte.

10. System nach einem der Ansprüche 3 bis 8, dadurch gekennzeichnet, daß die Decodiervorrichtung des Empfängers eine doppelte differentielle Decodiervorrichtung ist, die eine Vorhersageeinrichtung (86) zur Berechnung der zwei Vorhersagewerte $P_1$, $P_2$ und von zwei rekonstruierten Werten $R_1$ und $R_2$ umfaßt die in gleicher Weise wie diejenigen des Senders berechnet werden und von denen jeweils der eine oder andere ausgewählt wird, wenn der Empfänger einen Änderungscode empfängt.

11. System nach einem der Ansprüche 3 bis 10, dadurch gekennzeichnet, daß die erste und die zweite Quantifiziercharakteristik gleich sind und daß die Vorrichtungen zur Berechnung der Codes verschiedene Vorhersagecharakteristiken anwenden.

Fig.1

Fig.2

Fig.3

Fig.4

$$d(n,p_i)=X-p$$

$$d(n,p_i)=-Kp_i+b_n$$

$n$

$K=0,45$

$O$

$P_i$

## Fig.5

$X-P$

$n=3$

$n=2$

$n=1$
$n=0$

$O$

$P$

$n=4$

$n=5$

$n=6$

## Fig.6

Fig.7

Fig.8

Fig.9

Fig.10

Fig.11

Fig. 12

Fig. 13

Fig.14